# EUROPÄISCHE PATENTSCHRIFT

(11) **EP 0 959 977 B1**
(45) Veröffentlichungstag und Bekanntmachung des Hinweises auf die Patenterteilung: **25.09.2002**
(21) Anmeldenummer: 98905413.5
(22) Anmeldetag: 09.02.1998
(51) Int. Cl.: B01D 25/26, B01D 29/46, B01D 29/00

(54) **FLACHES FILTERELEMENT UND AUS FILTERELEMENTEN ZUSAMMENGESETZTES FILTERMODUL**
FLAT FILTER ELEMENT AND FILTER MODULE COMPOSED OF FILTER ELEMENTS
ELEMENT FILTRANT PLAT ET MODULE FILTRANT COMPOSE D'ELEMENTS FILTRANTS

(30) Priorität: 15.02.1997 DE 19705856
(43) Veröffentlichungstag der Anmeldung: 01.12.1999
(73) Patentinhaber: Seitz-Schenk Filtersystems GmbH, 55543 Bad Kreuznach (DE)
(72) Erfinder: STROHM, Gerhard, D-55278 Dexheim (DE); SCHNIEDER, Georg, D-55545 Bad Kreuznach (DE); HEPP, Wolfgang, D-55232 Alzey (DE)
(74) Vertreter: Fuchs Mehler Weiss & Fritzsche
(86) Internationale Anmeldenummer: EP9800682
(87) Internationale Veröffentlichungsnummer: WO98035740

(56) Entgegenhaltungen:
- EP-A- 0 451 947
- GB-A- 570 960
- US-A- 2 522 502
- US-A- 3 702 659
- US-A- 4 383 060
- US-A- 5 580 454

## Beschreibung

Die Erfindung betrifft ein flaches Filterelement, insbesondere eine Filterscheibe, aus Tiefenfiltermaterial mit einer Außenkontur und mit Durchströmungsflächen für Filtrat und Unfiltrat gemäß dem Oberbegriff des Anspruchs 1. Die Erfindung bezieht sich auch auf ein Filtermodul, das aus diesen Filterelementen zusammengesetzt ist.

Schichtenfilter oder Filterschichten bestehen aus Tiefenfiltermaterial, unter dem solche Materialien verstanden werden, die porös und durchströmbar sind, d.h. bei denen ein konvektiver Stofftransport durch die Materialien möglich ist.
Tiefenmaterial kann organische und/oder anorganische, faserige und/oder körnige Stoffe aufweisen. Als Rohstoffe für das Tiefenfiltermaterial werden beispielsweise Zellulose, Kunststoffasern, Kieselgur, Perlite oder Metalloxide verwendet.
Hierbei können Kieselgure und Perlite den Filterschichten zur Vergrößerung der inneren Oberfläche und damit zur Vergrößerung des Trubvolumens zugesetzt werden. Weiterhin können in den Hohlräumen Bestandteile des zu behandelnden Fluids durch Sperrwirkung und/oder Absorption/Adsorption zurückgehalten werden. Beispiele von Materialien, die auch fiir Tiefenfilteraufgaben verwendet werden können, sind Papiere, Pappen, Filterschichten, Membrane, poröse Keramikmaterialien, Metall- oder Polymergewebe, Nonwoven und gesinterte Materialien, z.B. aus Metallen, Metalloxiden, Glas oder Polymeren.

Der Einsatzbereich der Filterschichten reicht von der Klärung und Behandlung von Flüssigkeiten in der gesamten Getränkeindustrie bis in den Pharmabereich und die chemische Industrie. Filterschichten weisen nicht nur eine Siebwirkung auf, mit der grobe Teilchen auf der Oberfläche der Filterschicht zurückgehalten werden, sondern insbesondere auch eine Tiefenwirkung für feine Teilchen auf, die in den Hohlräumen innerhalb des Tiefenfiltermaterials zurückgehalten werden. Je nach Art der verwendeten Materialien können diese Filterschichten auch eine Adsorptionswirkung aufweisen und fiir bestimmte Anwendungszwecke kann die Oberfläche nachbehandelt sein, damit im trockenen und feuchten Zustand sich keine faserigen Teilchen ablösen können. Im nassen Zustand sind die Filterschichten relativ weich und neigen zum Quellen. Dies wird beispielsweise in Horst Gasper "Handbuch der industriellen Festflüssigfiltration" Hüthig-Verlag Heidelberg 1990, S. 239ff. beschrieben.

Üblicherweise werden diese Filterschichten in sogenannten Schichtenfiltergeräten bzw. Filterpressen durch Einklemmen zwischen Filterplatten oder Filterrahmen betrieben. Eine Übersicht über diesen Stand der Technik ist ebenfalls in Horst Gasper "Handbuch der industriellen Festflüssigfiltration" S. 166ff. zusammengestellt.

Danach werden die Filterschichten einzeln von Hand in horizontale oder vertikale Gestelle eingelegt. Rahmen aus Edelstahl oder Kunststoff sorgen für die Trennung der Filterschichten und bilden Räume zum Verteilen des Unfiltrats und zum Sammeln des Filtrats. Bedingt durch die weitgehende manuelle Tätigkeit beim Einlegen der Filterschichten in die Gestelle, beim Ausbau der Filterschichten aus den Gestellen und die anschließend notwendige Reinigung der Filterrahmen ist der Betrieb derartiger Filter mit hohen Personalkosten verbunden. Die Reinigung ist insbesondere dann aufwendig und unter Umständen auch für das Personal gefährlich, wenn aggressive Medien filtriert worden sind. Daneben sind die Investitionskosten für derartige Filtergeräte sehr hoch, da für jede vorgesehene Filterschicht ein speziell ausgebildeter Filterrahmen benötigt wird.

Weiterhin weisen diese Filter in der Regel durch ihre offene Bauart geringe aber meßbare Fluidverluste beim Betrieb auf, die an den Stirnseiten der Filterschichten aus diesen heraustreten. Die Vermeidung von Tropfverlusten ist nur durch speziell aufwendige Maßnahmen mit einer Vielzahl von Dichtungen möglich. Eine Form der Abdichtung zur Umgebung wird in der DE 39 06 816 C3 beschrieben.

Dem Nachteil bezüglich der Handhabung steht der Vorteil gegenüber, daß die Herstellung von Filterschichten oder Filtervliesen relativ preisgünstig ist, weil diese auf kontinuierlich arbeitenden Maschinen erfolgen kann.

Tiefenfiltermodule sind in vielfältigen Bauformen bekannt, wobei der Mehrheit dieser Filtermodule gemeinsam ist, daß die Einheiten aus ebenen Materialien, also Filterkartons, Schichten, Papieren, Vliesen oder Geweben hergestellt sind. Aus der EP 0 461 424 B1 ist ein Tiefbettfilter bekannt, dass zur Vergrößerung der Filtrationsfläche eine plissierte Filterschicht aufweist. Die Durchströmung der plissierten Filterschicht erfolgt senkrecht zur Oberfläche der Filterschicht.

Eine ähnliche Anordnung ist auch in der EP 0 475 708 A1 beschrieben. Andere bekannte Ausführungsformen betreffen Tiefenliltermaterial, das um einen Innenkern in eine oder mehreren Schichten gewickelt ist, wobei zur Vergrößerung der Filterfläche das Filtermedium auch in Schlaufenform um den Innenkern gewickelt sein kann. Auch bei diesen Ausführungsformen erfolgt die Durchströmung der Filtermedien im wesentlichen senkrecht zur Oberfläche der Filterschicht.

Ein Filtermodul aus aufeinandergestapelten Schichtenfilterelementen ist der EP 0 291 883 A3 zu entnehmen. Zur Fertigung des beschriebenen Moduls werden zunächst Filtertaschen mit innenliegendem Drainagematerial hergestellt, die von einem Dichtungselement und einer Kunststoffmasse umschlossen sind. Diese Taschen werden anschließend aufeinandergestapelt. Auch bei diesem Filtermodul sind zusätzliche Bauteile fiir die beanstandete Anordnung der Filterschichten erforderlich. Die Strömung durch das Filtermodul erfolgt in der Ebene der Filterschichten, die dann allerdings senkrecht zur Schichtebene durchströmt werden müssen, um die Filtration zu bewirken.

Die WO 94/09880 beschreibt ein Filterelement für die Tiefenfiltration, das aus einem porösen, dickwandigen selbsttragenden rohrförmigen Filterelement mit einem Hohlkern besteht. Dieses rohrförmige Filterelement besteht im wesentlichen aus zwei Schalen, wobei die äußere Schale große Poren und die innere Schale feine Poren aufweist. Ein Vorteil wird darin gesehen, daß bei diesem Aufbau im Gegensatz zu feinporigen homogen aufgebauten Filtermodulen, sofern sie in der bisher bekannten Weise gefertigt werden, keinen so hohen Widerstand der Flüssigkeit entgegensetzen. Andererseits ist die Filtrationsfläche gering.

Die US 2,522,502 beschreibt flache, stapelbare Filterelemente, die Durchbrechungen und eine innere Struktur aufweisen. Allerdings wird die innere Struktur durch großflächige Durchbrechungen bestimmt, in die das Unfiltrat durch Kanäle von außen einströmt.

Diese Ausgestaltung hat den Nachteil, daß im Vergleich zur Gesamtfläche des Filterelements nur wenige Durchströmungsflächen zur Verfügung stehen. Ein weiterer Nachteil ist darin zu sehen, daß die zu filtrierende Flüssigkeit aufgrund des geringen Strömungswiderstandes immer den Weg in die großflächigen Öffnungen suchen wird, so daß die Umfangsfläche des Filterelements als filtrationswirksame Fläche ausfällt.

Die US 5,580,454 beschreibt Filterelemente, die nicht aus Tiefenfiltermaterial sondern aus spritzgegossenen Kunststoffteilen bestehen, die an ihrer Oberfläche filtrationswirksame Nuten oder Rillen aufweisen.

Die US 4,683,060 beschreibt einen Stapel aus Filterscheiben und Abstandshaltern, die ähnlich wie in der US 5,580,454 nicht aus Tiefenfiltermaterial bestehen. Auch diese Filterscheiben weisen Rillen oder Nuten auf, in denen sich Partikel ablagern können. Insofern findet die Filtration an der Oberfläche der Filterscheiben statt.

Die GB 570.960 beschreibt eine Filtrationsvorrichtung, bei der alternierend Platten und sogenannte Controller übereinander angeordnet sind. Diese Controller bilden mit den Platten Kammern, in die das Unfiltrat durch runde Öffnungen in die Platten einströmt. Abfließen kann die Flüssigkeit nur durch Spalten zwischen den Platten und den Controller-Stegen, wobei durch den Strömungsdruck die nachgiebigen Stege des Controllers und die Platten leicht auseinandergedrückt werden. Beim Durchströmen der Spalte wird die Flüssigkeit filtriert. Insofern besitzen die Einzelelemente überhaupt keine Durchströmungsflächen und sind nicht aus filtrationswirksamem Tiefenfiltermaterial gefertigt.

Soweit am Außenumfang Ausnehmungen vorgesehen sind, dienen diese zum Befestigen und Verspannen der Platten.

Aufgabe der Erfindung ist es, ein flaches Filterelement, insbesondere eine Filterscheibe, und ein aus diesen Filterelementen aufgebautes Filtermodul zu schaffen, das bei großer Filtrationsfläche eine einfache Handhabung und Entsorgung ermöglicht. Diese Aufgabe wird mit einem flachen Filterelement dadurch gelöst, daß die Durchbrechungen erster und zweiter Art jeweils eine schmale längliche Kontur aufweisen, so daß sich eine gitter- oder siebartige Struktur ausbildet, wobei die gesamte zur Verfügung stehende Fläche des Filterelements mit Durchbrechungen versehen ist. Dadurch wird eine möglichst große Filtrationsfläche im Inneren des Filterelements erzielt. Die Stabilität des Filterelements wird nur von dem verbleibenden Tiefenfiltermaterial zwischen den Durchbrechungen erster und zweiter Art bestimmt.

Um die Zuführung von Unfiltrat in das Innere des Filterelements und das Abführen von Filtrat aus dem Filterelement zu ermöglichen, ist mindestens eine Durchbrechung (Durchbrechung erster Art) vorgesehen, die sich bis zum Rand des Filterelements erstreckt oder über mindestens eine Verbindungsdurchbrechung mit dem Rand in Verbindung steht. Die Durchbrechungen erster Art können für die Zuführung von Unfiltrat, aber auch bei umgekehrter Betriebsweise zum Abführen des Filtrats genutzt werden.

Diese Durchbrechungen erster Art sind mit mindestens einer Durchbrechung (Durchbrechung zweiter Art) kombiniert, die mit der Durchbrechung erster Art nicht in Verbindung steht und in mindestens einer Sammeldurchbrechung mündet oder über mindestens eine Verbindungsdurchbrechung mit der Sammeldurchbrechung in Verbindung steht.

Auf Durchbrechungen, die sich bis zum Rand des Filterelements erstrecken, kann dann verzichtet werden, wenn die Zu- bzw. Abführung von Unfiltrat bzw. Filtrat in/aus dem Inneren des Filterelements durch entsprechend ausgebildete Endplatten sichergestellt ist.

Das Tiefenfiltermodul ist aus mindestens zwei solcher Filterelemente zusammengesetzt, wobei diese Filterelemente derart aufeinandergestapelt sind, daß nur die Durchbrechungen gleicher Art miteinander in Verbindung stehen und auf diese Art und Weise Filtrat- und Unfiltratkanäle bilden.

Vorteilhafte Ausgestaltungen werden in den abhängigen Patentansprüchen beschrieben.

Der Erfindung liegt die Erkenntnis zugrunde, daß Filterscheiben aus Tiefenfiltermaterial ohne Zwischenplatten und dergleichen eingesetzt werden können, wenn das Filterelement nicht senkrecht zur Scheibenebene, sondern radial, d.h. beispielsweise über die Umfangsfläche angeströmt wird. Da die Filtrationsfläche bei dieser Betriebsweise gering ist, wurden Entwicklungen in dieser Richtung bisher verworfen. Es hat sich jedoch überraschend gezeigt, daß dieser Nachtell durch die Ausbildung einer inneren Struktur behoben werden kann, weil weitere Flächen durch das Vorsehen von Durchbrechungen freigelegt werden, die als Durchströmungsfläche für Filtrat oder Unfiltrat genutzt werden können.

Ein Vorteil der Erfindung besteht darin, daß aufgrund der frei wählbaren Geometrie der inneren Struktur die Größe der Filtrationstiefe und die Größe der Filtrationsfläche, d.h. der Durchströmungsfläche, unabhängig voneinander frei eingestellt werden können. Dadurch eröffnen sich mehr Möglichkeiten hinsichtlich des Aufbaus des Tiefenfiltermaterials. Bei einem offenporigen Tiefenfiltermaterial läßt sich durch eine größere Filtrationstiefe, d.h. durch einen größeren Abstand der Durchbrechungen zueinander, diesselbe Abscheiderate und damit Trennschärfe einstellen wie bei einem Material, das kleinere Poren aufweist und eine geringe Filtrationstiefe besitzt.

Ferner können die adsorptiven Eigenschaften des Tiefenfiltermaterials besser genutzt werden, weil die Filtrationstiefe, d.h. der filtrationswirksame Bereich des Tiefenfiltermaterials, nicht mehr limitiert ist wie beim Stand der Technik.

Da beim erfindungsgemäßen Filtermodul die beim Stand der Technik üblichen Halterahmen entfallen, wird die Adsorptionskapazität vergrößert, d.h. pro umgebautem Raum kann in einem Filtermodul mehr Austauschermaterial untergebracht werden.

Als Additive mit Adsorptionseigenschaften kommen insbesondere Aktivkohle, PVP, PVPP und Ionenaustauschermaterialien in Frage sowie selektiv wirkende Adsorbentien und aktive Medien.

Ein weiterer Vorteil eröffnet sich im Bereich der Entsorgungsfähigkeit der Filtermodule. Weil keine Zwischenplatten oder Halterahmen aus einem anderen Material verwendet werden, kann das Filtermodul als Ganzes entsorgt werden, ohne die Filterscheiben von anderen Materialien trennen zu müssen. Unter diesem Gesichtspunkt sind insbesondere Filterelemente aus 100% organischen Materialien, sog. Bioschichten, von Vorteil, weil diese z.B. vollständig thermisch verwertet werden können.

Die Durchbrechungen in den Filterelementen können während der Herstellung der · Filterschichten gebildet werden, indem entsprechende Formeinsätze verwendet werden. Eine andere Möglichkeit besteht darin, die Durchbrechungen nach der Herstellung des Filterelements, das auf herkömmliche Art und Weise erfolgen kann, beispielsweise durch Stanzen oder Wasserstrahlschneiden einzubringen. Das hierbei aus dem Filterelement entfernte Material kann dem Herstellungsprozeß weiterer Filterelemente wieder zugeführt werden. Insofern entsteht kein Abfall.

Die Ausrichtung der Durchströmungsflächen hängt vom Herstellungsvorgang ab. So können beim Ausstanzen durchaus auch geneigte Durchsrömungsflächen hergestellt werden, die nicht senkrecht zur Ebene des Filterelements, bei einer Scheibe ist dies die Scheibenebene, ausgerichtet und etwas geneigt sind, wobei Abweichungen vom rechten Winkel um maximal ± 10° möglich sind. Eine der Durchströmungsflächen, die sich nicht im Inneren des Filterelements befindet, kann auch die Stirnfläche des Filterelements, d.h. die Umfangsfläche bei einer Filterscheibe, sein.

Vorzugsweise ist die Summe aller Durchströmungsflächen eines Filterelements, worunter sowohl die äußere Durchströmungsfläche als auch die im Inneren des Filterelements befindliche Durchströmungsfläche gemeint ist, größer als die Summe aus der Außenumfangsfläche eines kleinsten, das Filterelement umhüllenden konvexen Körpers und der Außenumfangsfläche eines größten konvexen Körpers, der in eine beliebige Durchbrechung des Filterelements eingeschrieben ist. Konvexe Körper sind z.B. Kugeln, Ellipsoide, Zylinder, Kegel, Winkel, Tetraeder oder Quader und werden in "Kleine Enzyklopädie-Mathematik", VEB Bibliographisches Institut, Leipzig 1979, S.625 beschrieben.

Vorteilhafterweise besitzt das Filterelement eine der inneren Strukturen angepaßte Außenkontur, so daß die Breite des filtrationswirksamen Bereichs des Tiefenfiltermaterials überall gleich groß ist. Damit wird sichergestellt, daß die Filtrationswirkung des Filterelements längs seines gesamten Umfangs überall gleich ist. Es kann aber auch vorteilhaft sein, die Breite des filtrationswirksamen Bereichs im Außenbereich größer zu wählen als im Inneren des Filterelements, um z.B. die Stabilität zu erhöhen und ggf. Fixierstrukturen aufzunehmen.

Um eine große Filtrationsfläche zu erzielen, wählt man für die Durchbrechung vorzugsweise eine Art fingerförmige Durchbrechung. Durch die Anpassung der Außenkontur an die innere Struktur des Filterelements erhält man eine mäanderartige Gestalt mit einer großen Umfangsfläche und somit entsprechend großer Begrenzungsflächen der Durchbrechung. Ein solches flaches Filterelement kann beispielsweise von außen angeströmt werden, wobei das Unfiltrat überall längs des Umfangs einen gleich starken filtrationswirksamen Bereich des Tiefenfiltermaterials durchdringen muß. Das Filtrat sammelt sich in diesem Fall im Innern der Durchbrechung und wird von dort über entsprechende Zubehörteile abgeführt.

Die Durchbrechungen erster und zweiter Art werden vorzugsweise benachbart zueinander angeordnet, daß die Breite des sich dazwischen befindlichen filtrationswirksamen Bereichs des Tiefenfiltermaterials überall gleich groß ist.

Die Dicke der Filterschichten kann unterschiedlich gewählt werden. Je dicker die Filterelemente bzw. Filterscheiben sind, desto weniger Elemente werden für den Aufbau eines Filtermoduls benötigt. Auch der Aufwand für die Herstellung der Durchbrechungen bezogen auf das Volumen an Tiefenfiltermaterial verringert sich.

Die filtrationswirksamen Bereiche sind vorzugsweise ≥ 5mm, insbesondere 8 bis 20 mm stark. Die filtrationswirksamen Bereiche können somit ≤ oder auch größer sein als die Dicke des Filterelements. Denkbar sind auch filtrationswirksame Bereiche von 2 mm Stärke und einer Breite der Durchbrechungen von 0,5 mm. Durch die Anordnung der Durchbrechungen läßt sich auf diese Weise die Filtrationswirkung beeinflussen.

Im Feinstklärbereich ist es nicht erforderlich, daß die Durchbrechungen große Dimensionen aufweisen, weil die Beladung mit Partikeln äußerst gering ist, so daß keine Verstopfung der durch die Durchbrechungen gebildeten Filtrat- bzw. Unfiltratkanäle auftreten kann. Es reicht daher aus, wenn in das Filterelement bzw. die Filterscheibe als Durchbrechungen lediglich Schlitze eingebracht werden. Die Schlitze können sowohl in radialer Richtung als auch in Umfangsrichtung verlaufen und können auch mit breiteren Durchbrechungen beliebig kombiniert sein. Derartige Schlitze können mit einem Messer hergestellt werden, wobei das Tiefenfiltermaterial lediglich verdrängt wird, was den Vorteil hat, daß kein Material anfällt, wie z.B. beim Ausstanzen, das dem Herstellungsprozeß wieder zugeführt werden muß.

Bevorzugt ist eine Filterscheibe mit einer runden Außenkontur, wobei die Durchbrechungen erster und zweiter Art auf konzentrischen Kreisen liegen. Die Durchbrechungen erster Art stehen über eine sich in radialer Richtung erstreckende Verbindungsdurchbrechung mit dem Scheibenrand in Verbindung. Eine Sammeldurchbrechung kann im Mittelpunkt der Scheibe angeordnet sein, die über eine radiale Verbindungsdurchbrechung mit den Durchbrechungen zweiter Art in Verbindung steht.

Um eine möglichst große Filtrationsfläche zu schaffen, werden die Durchbrechungen erster Art und zweiter Art alternierend angeordnet. Es wird die gesamte zur Verfügung stehende Fläche der Filterelemente mit Durchbrechungen versehen. Die Breite der Durchbrechungen muß an die jeweilige Filtrationsaufgabe angepaßt sein. Geringe Breiten ermöglichen es, möglichst viele Durchbrechungen auf einem Filterelement vorzusehen und somit eine große Filtrationsfläche zur Verfügung zu stellen. Andererseits dürfen, wenn nicht gerade im Feinstklärbereich gearbeitet wird, die.Dimensionen der Durchbrechungen nicht so klein gewählt sein, daß eine Verblockung innerhalb kürzester Zeit innerhalb der Durchbrechungen stattfindet, so daß das Filterelement ausgetauscht werden muß.

Die Filterscheibe kann neben einer runden oder ovalen Außenkontur auch eine n-eckige Außenkontur aufweisen, wobei die Durchbrechungen vorzugsweise parallel zu einer Scheibenkante angeordnet sind.

Wenn die Filterscheibe vorzugsweise eine runde Außenkontur aufweist, können die Durchbrechungen erster Art und die Durchbrechungen zweiter Art auch jeweils auf mindestens einer Spirale liegen. Die Spiralen sind in diesem Fall ineinander verschlungen, so daß innerhalb der einzelnen Windungen der Spiralen eine Filtration durch weitgehend gleichstarke filtrationswirksame Bereiche des Tiefenfiltermaterials stattfinden kann.

Um die Stabilität des Filterelements zu erhöhen, weisen die Durchbrechungen und/oder die Verbindungsdurchbrechungen vorzugsweise Versteifungsstege auf. Diese Versteifungsstege bestehen vorzugsweise aus demselben Material wie das Filterelement, können die gleiche Dicke wie das Filterelement aufweisen oder aber auch dünner ausgebildet sein. Beim Ausstanzen der Durchbrechungen können die Versteifungsstege gleichzeitig geprägt oder verdichtet werden, so daß die Dicke geringer ist als die Dicke des Filterelements.

Wenn die Versteifungsstege innerhalb der Durchbrechungen diesselbe Stärke aufweisen wie das Filterelement, kann bei aufeinandergestapelten Filterscheiben beispielsweise das Filtrat nicht aus allen Durchbrechungen zur Sammeldurchbrechung gelangen, so daß entsprechend ausgebildete Endplatten des Filtermoduls erforderlich wären, um die Filtrat- und Unfiltratströme zusammenzuführen. Um Verbindungen zwischen Durchbrechungen gleicher Art herzustellen, werden die Filterelemente je nach Ausgestaltung der Durchbrechungen und der Versteifungsstege verdreht, verschoben oder dergleichen aufeinandergestapelt.

Um die Ausrichtung der einzelnen Filterelemente beim Aufeinanderstapeln in der vorgesehenen Weise sicherzustellen, kann der Rand mindestens eine Fixierausnehmung aufweisen, was die Arbeit beim Aufeinanderstapeln der Filterelemente erleichtert. Fixierausnehmungen können auch im Inneren des Filterelements vorgesehen sein. Auch eine unregelmäßige Innen- oder Außenkontur ermöglicht in Verbindung mit geeigneten Bauteilen eine Fixierung und Zuordnung der Filterelemente.

Es können identische oder unterschiedliche Typen von Filterelementen zu einem Filtermodul aufeinandergestapelt werden. Im einfachsten Fall sind die Typen der Filterelemente bzw. Scheiben lediglich spiegelsymmetrisch.

Es können auch Filterelemente mit Durchbrechungen, die mit dem Rand des Filterelements in Verbindung stehen, mit Filterelementen mit Durchbrechungen, die nicht mit dem Rand des Filterelements in Verbindung stehen, kombiniert werden. Vorzugsweise werden solche Filterelemente dann alternierend aufeinandergestapelt. Je nach Ausgestaltung der Stege und Anordnung der Durchbrechungen müssen die Filterelemente gegeneinander gedreht aufeinandergelegt werden, damit die zusammengehörenden Durchbrechungen im Filtermodul Filtrat- und Unfiltratkanäle bilden. Der Verdrehwinkel kann durch die Lage und Breite der Versteifungsstege bestimmt sein, oder es ist ein fester Drehwinkel, z.B. 180° vorgegeben.

Die Filterelemente können unmittelbar aufeinandergelegt werden, sie können aber auch verklebt oder verschweißt sein. Es ist auch denkbar, zwischen zwei Filterelementen eine Zwischenlage mit oder ohne Durchbrechungen, beispielsweise aus rutschfestem Material, anzuordnen, um die Stabilität des Filtermoduls zu verbessern, was insbesondere dann von Bedeutung ist, wenn eine Rückspülung des Filtermoduls vorgenommen werden soll. Hierfür geeignet sind beispielsweise eine entsprechende Folie oder auch herkömmliche Filterscheiben ohne Durchbrechungen und ohne innere Struktur.

Das Filtermodul weist zwei Endplatten auf, zwischen denen die Filterelemente angeordnet sind, wobei insbesondere aufgrund der Quellfähigkeit der Filterschichten eine Endplatte beweglich gelagert ist.

Beispielhafte Ausführungsformen werden nachfolgend anhand der Zeichnungen näher erläutert.

Es zeigen:
- Figur 1a: eine Draufsicht auf ein mäanderförmiges Filterelement,
- Figur 1b: eine perspektivische Darstellung des in Figur 1a gezeigten Filterelements,
- Figur 2: eine Draufsicht auf ein Filterelement gemäß einer weiteren Ausrührungsform,
- Figur 3: einen Schnitt durch die in Figur 2 gezeigten Filterelemente längs der Linie III-III,
- Figuren 4 bis 9: Draufsichten auf Filterelemente unterschiedlicher Ausführungsformen,
- Figur 10: einen Ausschnitt eines Filterelements mit Schlitzen,
- Figur 11: eine perspektivische Darstellung eines Filtermoduls,
- Figur 12: ein Filtermodul in Explosionsdarstellung,
- Figur 13: eine vergrößerte Detaildarstellung eines Ausschnitts zweier aufeinandergestapelter Filterelemente und
- Figur 14: eine Filtervorrichtung mit einem Filtermodul.

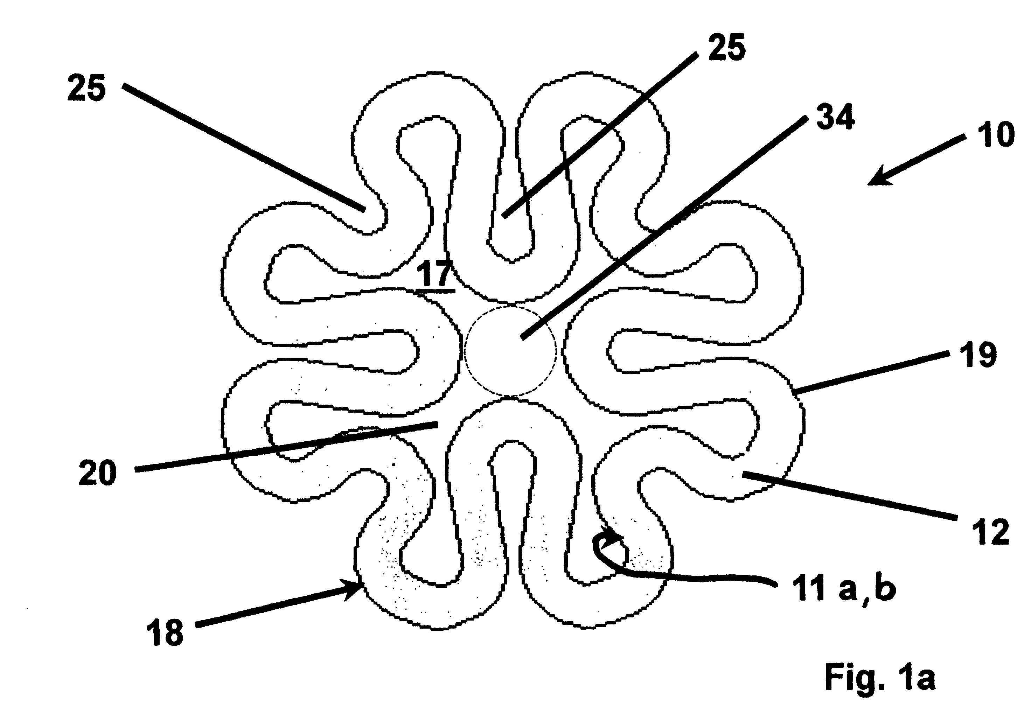

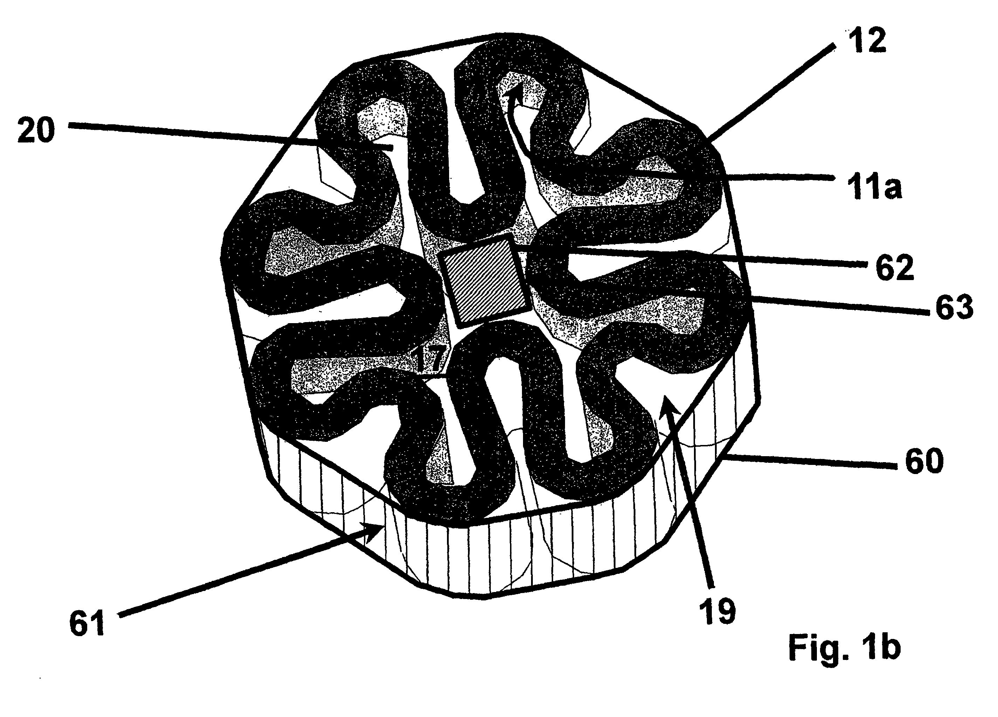

Die in den Figuren 1a und b gezeigte Ausführungsform eines flachen Filterelements 10 wird nicht vom Patentanspruch 1 umfaßt.

In der Figur 1a ist ein flaches Filterelement 10 dargestellt, das eine mäanderförmige Struktur aufweist. Nach der Herstellung eines herkömmlichen Filterelements, beispielsweise mit quadratischem Format, wird in das Filterelement 10 eine Durchbrechung 20 eingebracht, wodurch die innere Struktur 17 festgelegt wird. Die durch das Tiefenfiltermaterial 12 begrenzte Fläche der Durchbrechung 20 bildet eine Durchströmungsfläche 11a bzw. 11b für das Filtrat bzw. Unfiltrat, die ca. um den Faktor 2 größer ist als die entsprechende Fläche bei einem flächengleichen Ring. Es handelt sich in der hier gezeigten Ausführungsform um eine fingerartige Durchbrechung 20, an die die Außenkontur 18 ebenfalls beispielsweise durch Ausstanzen angepaßt ist. Das zurückbleibende Tiefenfiltermaterial 12 weist somit eine mäanderartige Struktur auf, wobei die Breite der filtrationswirksamen Bereiche überall gleich groß ist.

Wenn dieses Filterelement 10 beispielsweise radial von außen über die Umfangsfläche 19 angeströmt wird, dann bilden die Schlaufen auf der Außenseite Unfiltraträume 25. Im Innern des Filterelements 10 sammelt sich das Filtrat, das durch ein gestrichelt angedeutetes Kernloch 34 in einer nicht dargestellten Endplatte abgezogen wird.

Dieses Filterelement 10 kann auch in umgekehrter Richtung angeströmt werden, indem das Unfiltrat über das Kernloch 34 und somit über die Durchbrechung 20 zugeführt wird. In beiden Fällen wird das Filterelement 10 parallel zur Ebene des Filterelements, also im wesentlichen radial, angeströmt.

In der Figur 1b ist das in Figur 1a gezeigte Filterelement 10 perspektivisch dargestellt, um die konvexen Körper 60, 62 zu verdeutlichen. Das Filterelement 10 wird von dem kleinsten möglichen konvexen Körper (Außenkörper) umhüllt, der im gezeigten Beispiel ein Polyeder mit einer achteckigen Grundfläche ist, wobei die Ecken gerundet sind. Die dazugehörige Außenumfangsfläche 61 kann man sich als ein um das Filterelement 10 gelegtes Band vorstellen. In ähnlicher Weise ist in die Durchbrechung 20 ein größtmöglicher konvexer Körper (Innenkörper) 62 eingelegt, der eine Umfangsfläche 63 besitzt. Dieser konvexe Innenkörper besitzt eine viereckige Grundfläche. Aufgrund der eckigen Ausgestaltung des Filterelements 10 ist die Summe der Durchströmungsflächen 11a, 19 größer als die Summe der Flächen 61 und 63.

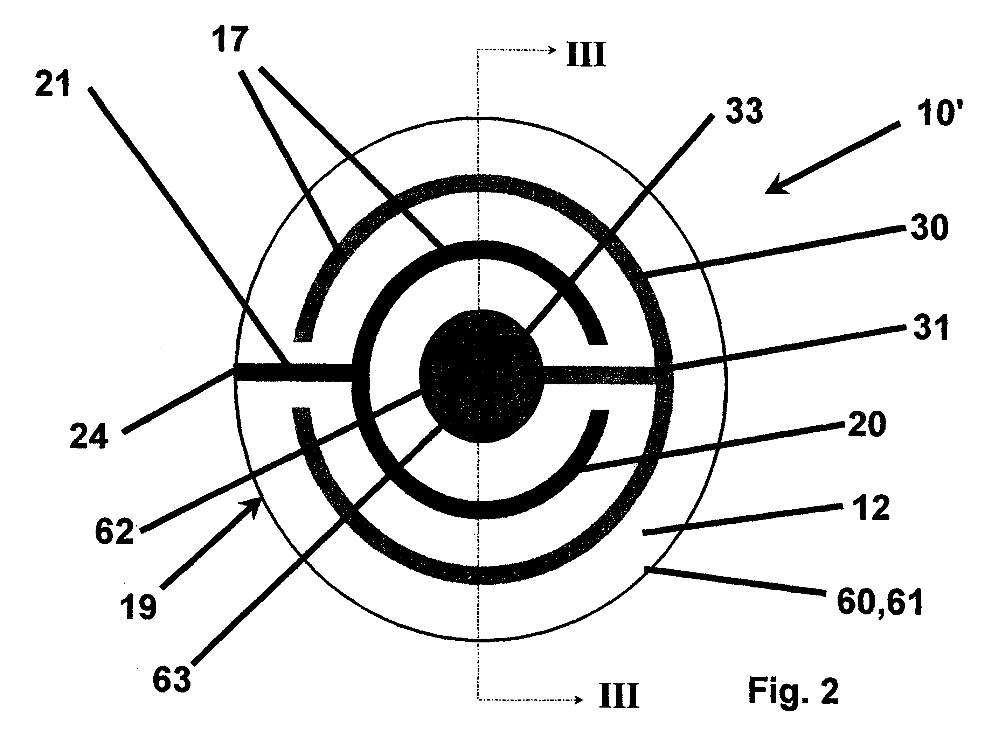

In der Figur 2 ist eine weitere Ausführungsform eines Filterelements in Form einer Scheibe 10' dargestellt, bei der zwei konzentrisch angeordnete ringförmige Durchbrechungen 20 und 30 in die Filterscheibe 10' eingebracht sind. Beide Durchbrechungen 20, 30 stehen nicht miteinander in Verbindung und bilden eine Durchbrechung erster Art und eine Durchbrechung zweiter Art. Die Außenumfangsfläche 61 des konvexen Außenkörpers 60 ist mit der Außenumfangsfläche 19 der Filterscheibe 10' identisch.

Die.Durchbrechungen 20 und 30 sind nicht zu einem Ring vollständig geschlossen, weil zusätzlich noch Verbindungsdurchbrechungen 21 und 31 vorgesehen sind, die die jeweiligen Kreise der Durchbrechungen 20 und 30 schneiden. Die Verbindungsdurchbrechung 21 stellt die Verbindung von der Innendurchbrechung 20 zur Umfangsfläche 19 dar. Die Verbindungsdurchbrechung 31 erstreckt sich ebenfalls in radialer Richtung und verbindet die äußere ringförmige Durchbrechung 30 mit einem kreisrunden Loch in der Mitte, die eine sogenannte Sammeldurchbrechung 33 darstellt. Sämtliche Durchbrechungen bilden zusammen die innere Struktur 17.

Die Sammeldurchbrechung 33 stellt in der hier gezeigten Ausführungsform die größte Durchbrechung innerhalb der Filterscheibe 10' dar, so daß dort der größtmögliche Konvexe Innenkörper 62 hineingelegt werden kann, der mit der Sammeldurchbrechung 33 identisch ist. Vergleicht man die Summe aller Durchströmungsflächen mit der Summe der Fläche 61 und der Fläche 63, so ist diese Summe aller Durchströmungsflächen größer.

Die Breite der filtrationswirksamen Bereiche zwischen der Umfangsfläche 19 und der äußeren Durchbrechung 30 bzw. der äußeren Durchbrechung 30 und der inneren Durchbrechung 20 sowie zwischen dieser Durchbrechung 20 und der Sammeldurchbrechung 33 ist überall gleich groß, so daß überall in der Filterscheibe 10' dieselbe Filtrationswirkung erzeilt wird.

Die Scheibe kann so betrieben werden, daß über den mit 24 gekennzeichneten Eingang der Verbindungsdurchbrechung 21 das Unfiltrat in die innere Durchbrechung 20 eingeleitet wird. Das Filterelement wird dadurch nicht nur über die Umfangsfläche 19, sondern auch im Inneren über die, durch die innere Durchbrechung 20 gebildeten Durchströmungsflächen, angeströmt.

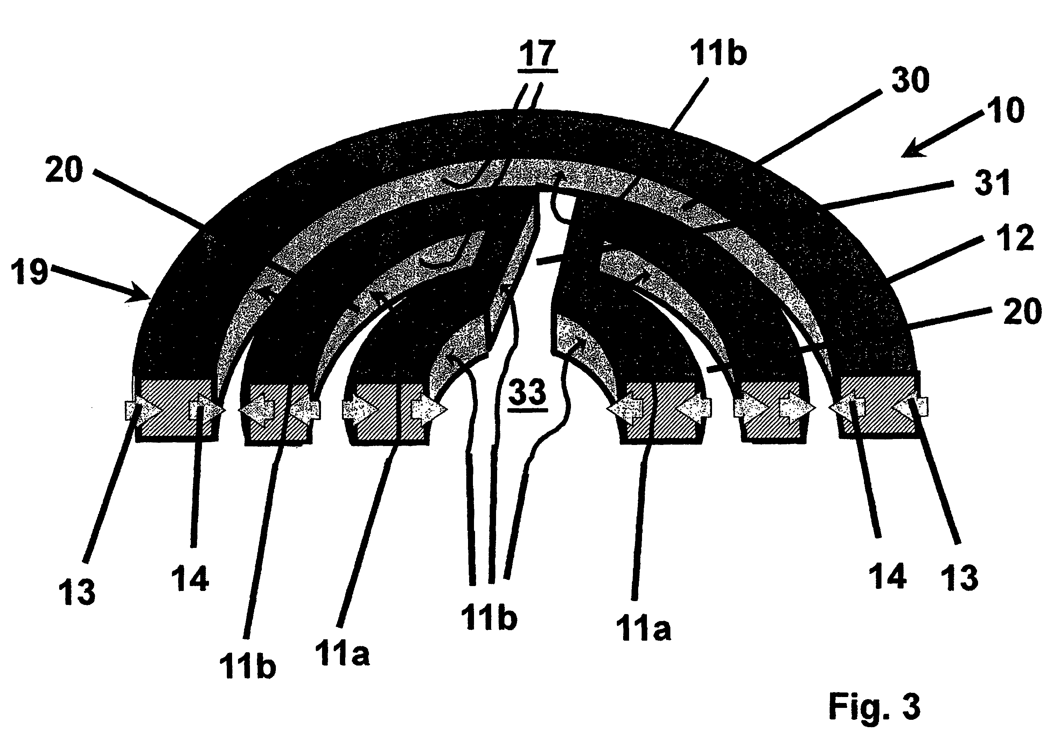

Wie in der Figur 3 zu sehen ist, die einen Schnitt längs der Linie III-III durch die Filterelemente gemäß Figur 2 zeigt, durchdringt das Unfiltrat in Pfeilrichtung 13 die filtrationswirksamen Bereiche von außen, d.h. über die Umfangsfläche 19, die somit eine Durchströmungsfläche bildet. Das Filtrat strömt an den Durchströmungsflächen 11b in die entsprechende Durchbrechung 30, wo das Filtrat gesammelt wird und über die Verbindungsdurchbrechung 31 in die Sammeldurchbrechung 33 gelangt. Gleichzeitig wird über die nur in Figur 2 gezeigte Verbindungsdurchbrechung 21 Unfiltrat der Durchbrechung 20 zugeführt, wo das Unfiltrat durch die Durchströmungsflächen 11a in das Tiefenfiltermaterial eindringt. Als Filtrat tritt es dann durch die Durchströmungsflächen 11b in die Durchbrechung 30 sowie in die Sammeldurchbrechung 33 ein.

Bei umgekehrter Betriebsweise würde das Unfiltrat über die Sammeldurchbrechung 33 zugeführt werden, von wo aus es über die Verbindungsdurchbrechung 31 in die Durchbrechung 30 gelangen würde, wo es sich verteilt und durch die filtrationswirksamen Bereiche als Filtrat in der inneren Durchbrechung 20 austreten würde. Das Ableiten des Filtrats würde in diesem Fall dann über die Verbindungsdurchbrechung 21 erfolgen.

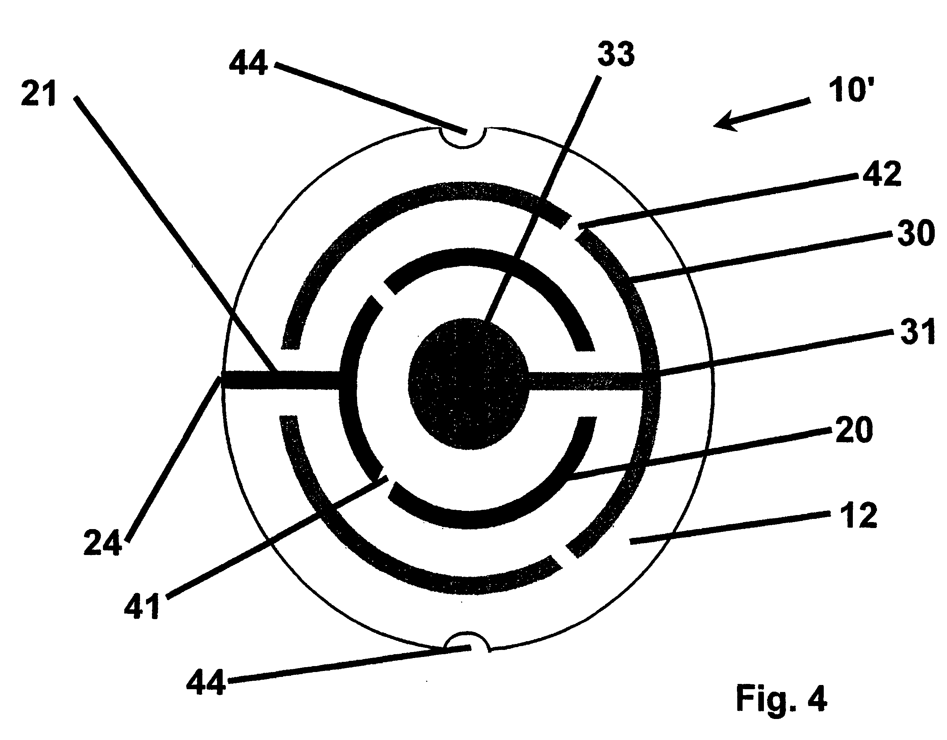

In der Figur 4 ist eine weitere Ausführungsform dargestellt, die im wesentlichen der in der Figur 2 gezeigten entspricht. Durch die ringförmigen Durchbrechungen 20 und 30 kann die gesamte Filterscheibe 10' unter Umständen zu instabil werden, insbesondere dann, wenn der Durchmesser sehr groß und die Dicke der Filterelemente sehr gering ist.

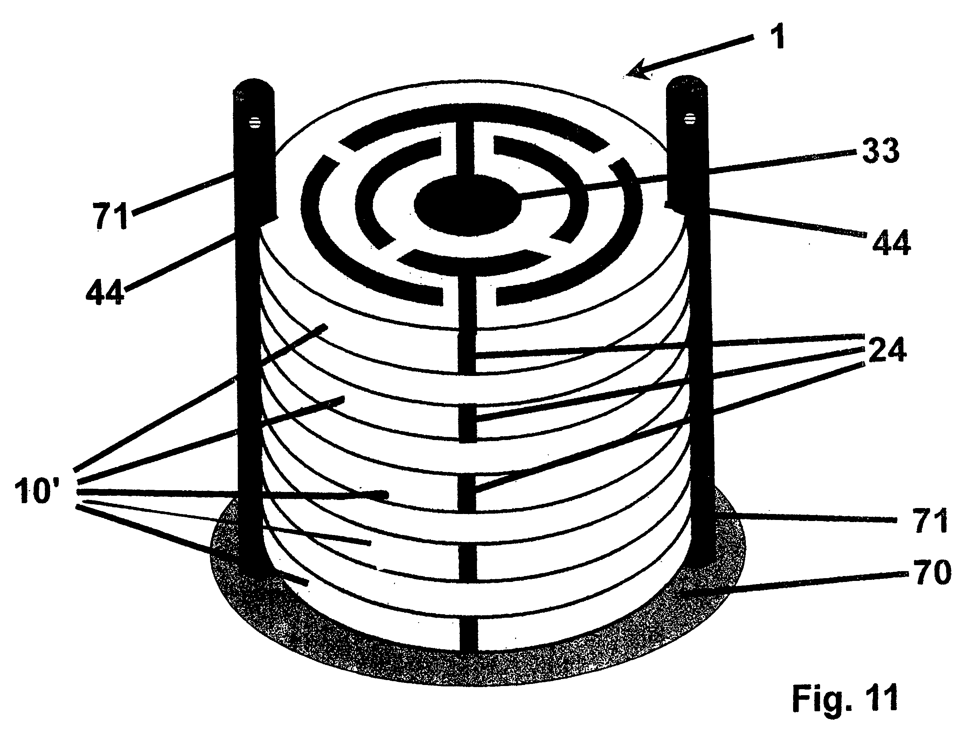

Um die Stabilität zu erhöhen, sind in der Durchbrechung 20 zwei Versteifungsstege 41 vorgesehen, die die Durchbrechung 20 in etwa drei gleichgroße kreisbogenförmige Abschnitte unterteilen. Entsprechend weist auch die äußere Durchbrechung 30 zwei Versteifungsstege 42 auf. Wenn die Filterscheiben 10' zu einem Filtermodul 1 aufeinandergestapelt werden, wie dies in Figur 11 dargestellt ist, ist bei der Ausführungsform gemäß Figur 4 darauf zu achten, daß die Scheiben exakt zueinander ausgerichtet sind, damit die Verbindungsdurchbrechungen 21 und 31 nicht versehentlich eine der Durchbrechungen 20 bzw. 30 kreuzen, was zu einer Vermischung von Filtrat und Unfiltrat führen würde. Es muß daher beim Zusammenbau darauf geachtet werden, daß die Durchbrechungen erster Art, hier die Durchbrechung 20, 21 nicht mit den Durchbrechungen zweiter Art (Durchbrechungen 30, 31, und 33) in Verbindung treten können. Um die Ausrichtung der Filterscheibe 10' festzulegen, sind an der Umfangsfläche 19 Fixierstrukturen 44 vorgesehen, in die die in der Figur 11 gezeigten Stäbe 71 eingreifen. In der Figur 11 sind die in Figur 4 dargestellten Filterscheiben 10' mit Filterelementen gemäß einer anderen Ausführungsform kombiniert, deren Durchbrechungen keine Verbindung zum Außenrand aufweisen.

Wenn identische Filterscheiben 10' gemäß der Ausführungsform der Figur 4 auteinandergestapelt werden, wobei die Verbindungsdurchbrechungen 21 alle übereinanderliegen, ist es erforderlich, eine entsprechende Endplatte vorzusehen, damit die einzelnen Abschnitte der Durchbrechungen 20 bzw. 30 miteinander kommunizieren können. Damit eine komplizierte Endplatte nicht notwendig ist, können auch die Filterscheiben 10' etwas verdreht zueinander aufeinandergestapelt werden. Der Verdrehwinkel muß entsprechend der Breite der Versteifungsstege 41 und 42 so gewählt werden, daß die Durchbrechungen 20 und 30 der jeweils benachbarten Filterscheibe 10' diese Versteifungsstege überdecken. Andererseits darf die Verdrehung nicht so groß gewählt werden, daß die Verbindungsdurchbrechungen 21 und 31 die Durchbrechungen 20 und 30 kreuzen.

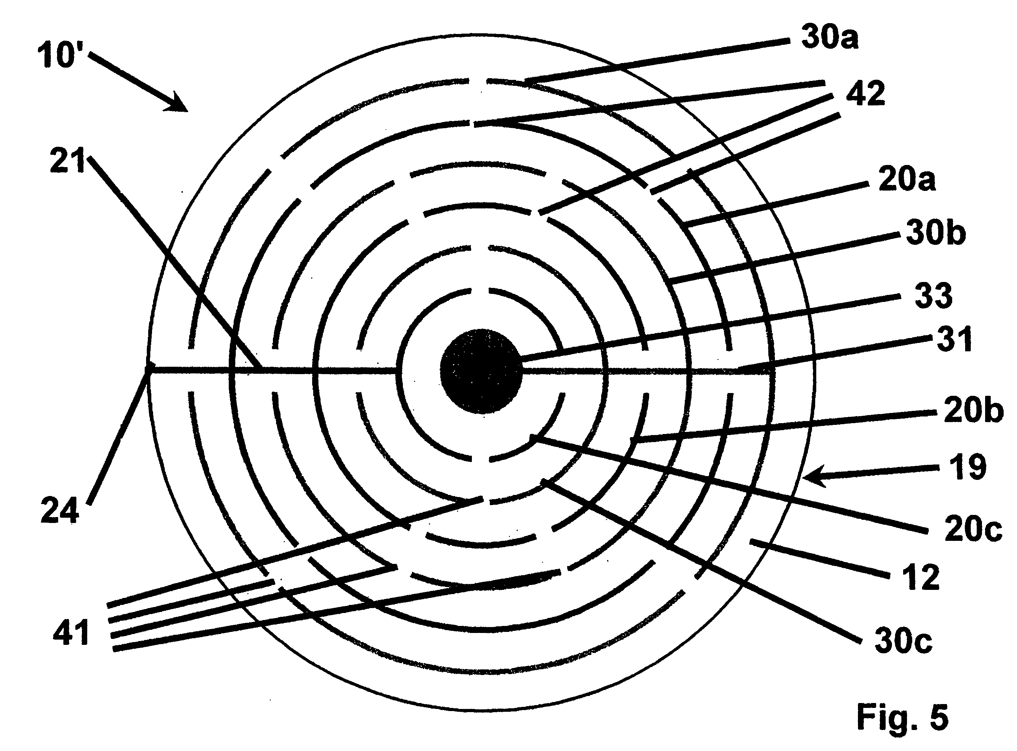

In der Figur 5 ist eine weitere Ausführungsform dargestellt, bei der insgesamt sechs konzentrische ringförmige Durchbrechungen vorgesehen sind. Die Durchbrechungen 20a bis c bilden die Durchbrechungen erster Art, während die Durchbrechungen 30a bis c die Durchbrechungen zweiter Art bilden, die über die gemeinsame Verbindungsdurchbrechung 31 mit der Sammeldurchbrechung 33 in Verbindung stehen. Entsprechend sind die Durchbrechungen 20a bis c über die Verbindungsdurchbrechung 21 mit der Umfangsfläche 19 verbunden. Auch diese Ausführungsform weist Versteifungsstege 41 und 42 auf.

In der nachfolgenden Tabelle ist die Durchströmungsfläche in Quadratmetern für ein Filtermodul zusammengestellt, das aus 250 Filterelementen mit einer Dicke von 0,4 cm besteht. Mit zunehmender Anzahl N von ringförmigen Durchbrechungen bei entsprechend größerem Außendurchmesser d max der Filterelemente werden bei N = 15 Durchbrechungen fast 70 m² erreicht. Die Breite der Durchbrechungen beträgt 5 mm und die Breite der filtrationswirksamen Bereiche 20 mm.

| N | d max [mm] | A Filtrat [m²] |
|---|---|---|
| 0 | 60 | 0,17 |
| 1 | 160 | 0,82 |
| 2 | 260 | 2,04 |
| 3 | 360 | 3,82 |
| 4 | 460 | 6,16 |
| 5 | 560 | 9,08 |
| 6 | 660 | 12,55 |
| 7 | 760 | 16,60 |
| 8 | 860 | 21,21 |
| 9 | 960 | 26,38 |
| 10 | 1060 | 32,12 |
| 11 | 1160 | 38,43 |
| 12 | 1260 | 45,30 |
| 13 | 1360 | 52,73 |
| 14 | 1460 | 60,73 |
| 15 | 1560 | 69,30 |

Interessant ist der Quotient aus der Filterfläche multipliziert mit der Filterdicke und den durch das Filtermodul beanspruchten Raum, da dieser Wert die Aufnahmekapazität des Filtermoduls bezogen auf den Raum wiedergibt. Unter Beachtung, daß sich bei der herkömmlichen Schichtenfiltration zwischen den Schichten Filterrahmen mit 1 cm Dicke befinden, liegt dieser Quotient bei 29%. Dem gegenüber liegt dieser Quotient bei dem erfindungsgemäßen Modul (z.B. fiir N = 12) bei 73%. Somit haben die erfindungsgemäßen Module eine wesentlich bessere Raumausnutzung.

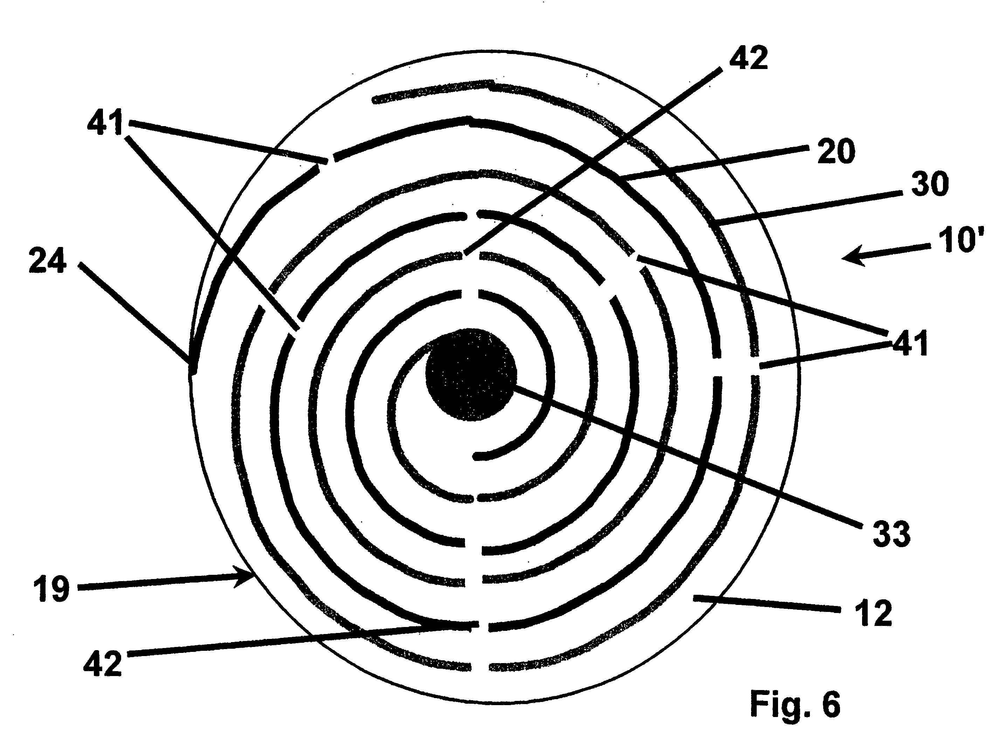

In der Figur 6 ist eine weitere Ausführungsform dargestellt, bei der zwei Durchbrechungen 20 und 30 in Form von ineinander verschlungenen Spiralen vorgesehen sind. Auch diese Durchbrechungen 20 und 30 besitzen Versteifungsstege 41 und 42.

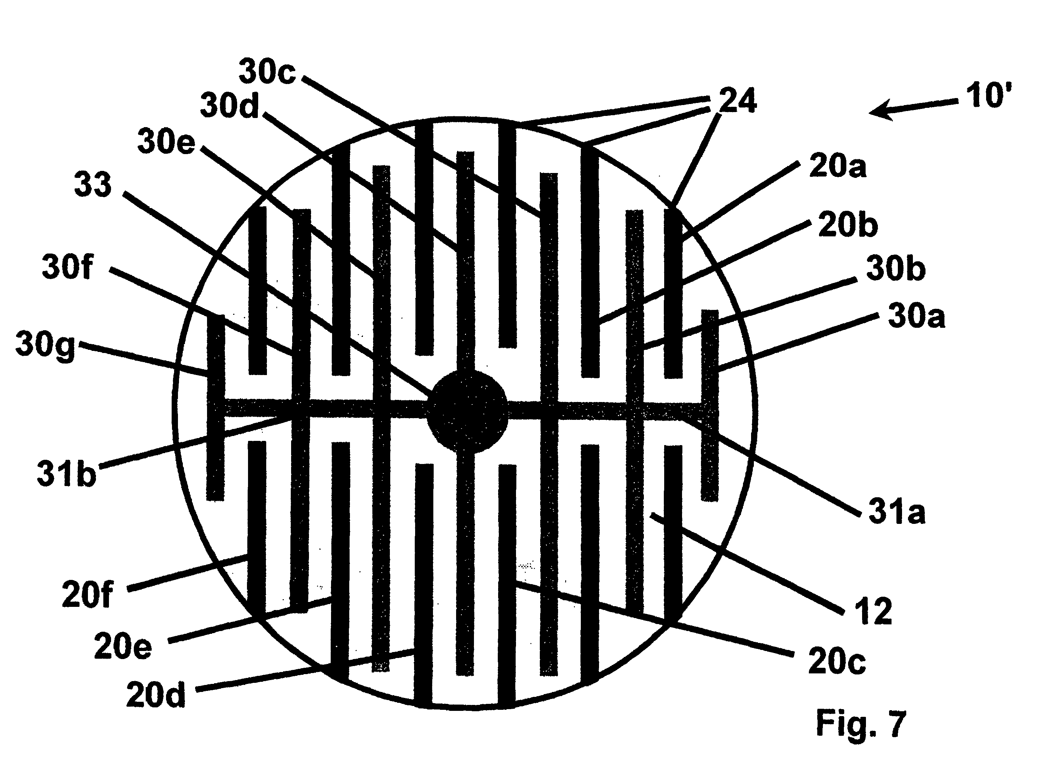

In den Figuren 7 bis 9 sind Filterscheiben 10' dargestellt, die mit geraden Durchbrechungen 20a bis f, 30a bis g versehen sind. Sämtliche Durchbrechungen erster Art 20a bis 20f münden an der Umfangsfläche 19. Sämtliche Durchbrechungen zweiter Art 30a bis 30g sind über zwei radiale Verbindungsdurchbrechungen 31a und 31b mit der Sammeldurchbrechung 33 verbunden.

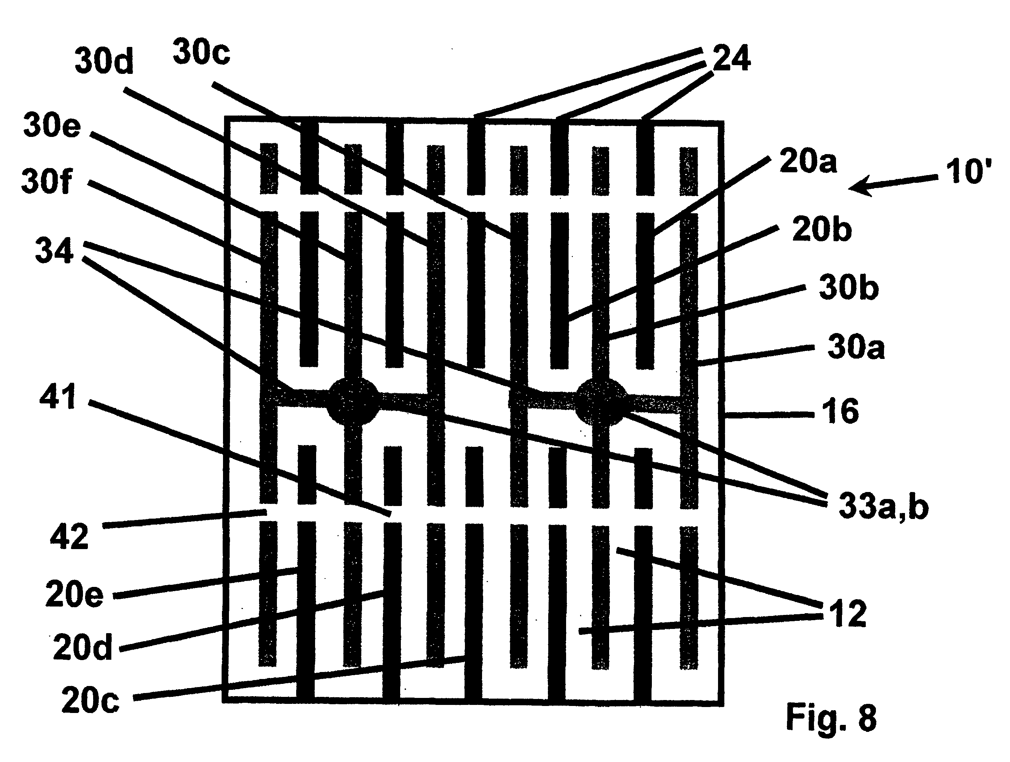

In der Figur 8 ist eine ähnliche Ausführungsform dargestellt, allerdings mit einer quadratischen Außenkontur. Die Durchbrechungen 20, 30 verlaufen parallel zur Seitenkante 16 des Filterelements 10. Außerdem sind zwei Sammeldurchbrechungen 33a und b vorgesehen. Innerhalb der Durchbrechungen zweiter Art 30a bis c und 30d bis f werden somit nochmals zwei Gruppen gebildet. Bei dieser Ausführungsform sind Versteifungsstege 41 und 42 vorgesehen, die die jeweiligen Durchbrechungen 20a bis f und 30a bis f in unterschiedlich lange Abschnitte unterteilen.

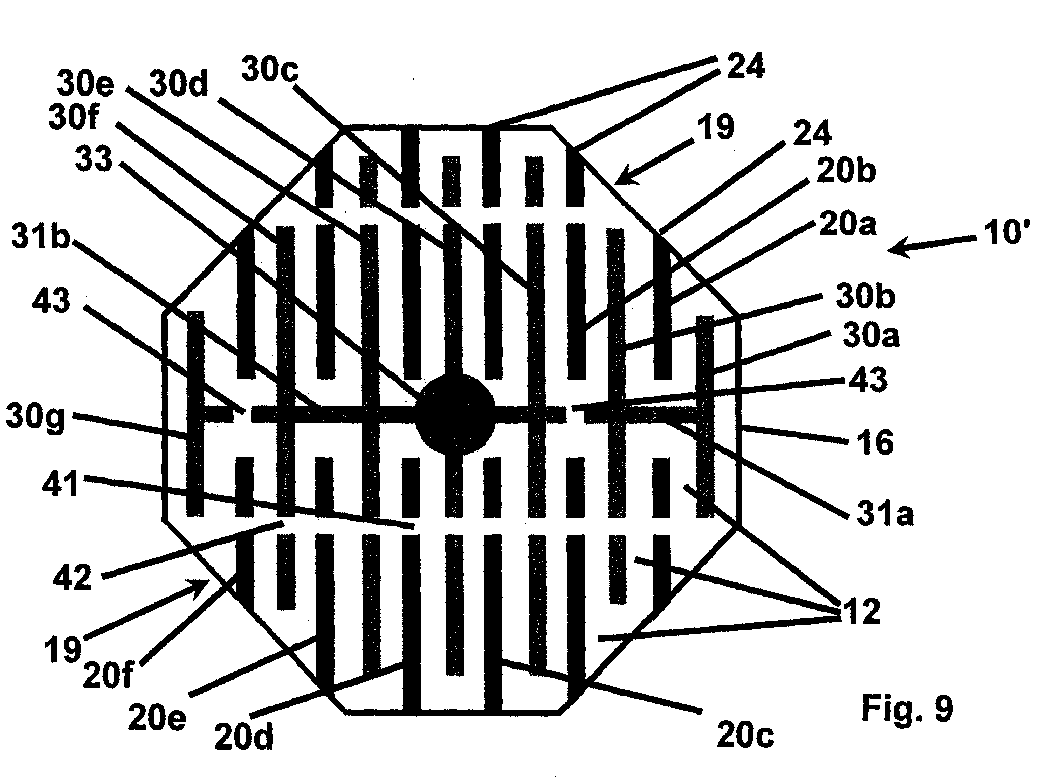

In der Figur 9 ist eine achteckige Filterscheibe 10' dargestellt, bei der sowohl die Durchbrechungen 20a-f, 30a-g als auch die Verbindungsdurchbrechungen 21a, b und 31a, b mit Versteifungsstegen 41, 42 und 43 versehen sind. Zur Bildung eines Filtermoduls können identische Filterscheiben 10' aufeinandergestapelt werden. Hierzu gibt es verschiedene Möglichkeiten. So können benachbarte Scheiben um jeweils 180° gedreht angeordnet werden. Es wird dadurch sichergestellt, daß die jeweiligen Verbindungsstege 41, 42 und 43 über einer entsprechenden Durchbrechung zu liegen kommen, so daß nur die Durchbrechungen der gleichen Art miteinander in Verbindung stehen und keine Durchmischung von Filtrat und Unfiltrat auftreten kann. Es ist auch denkbar nur jedes n-te Filterelement um 180° zu drehen.

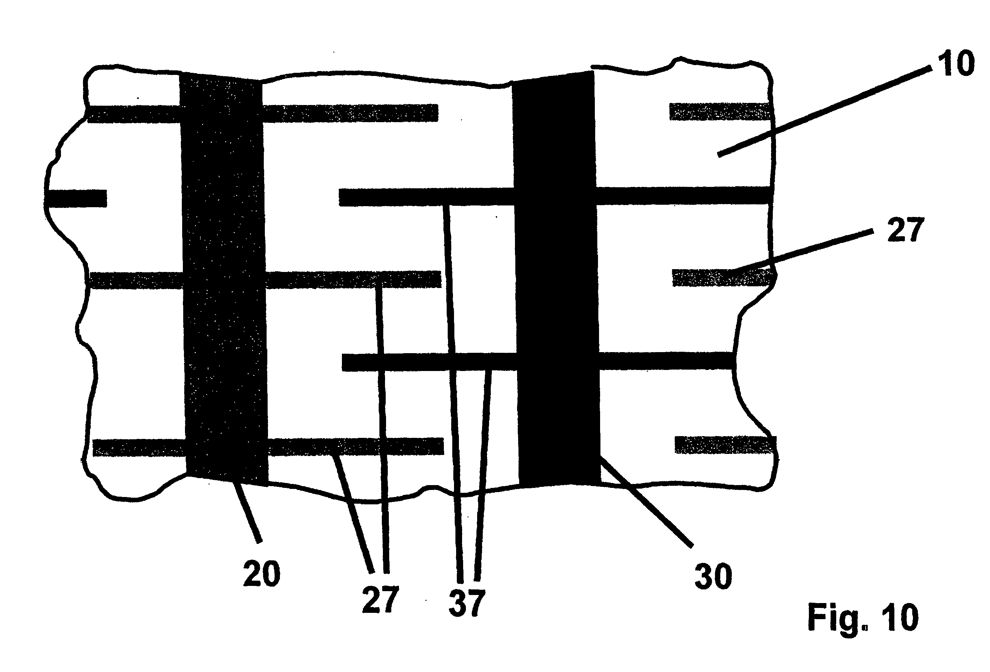

In der Figur 10 ist eine weitere Ausführungsform eines Filterelements 10 dargestellt, in der breite Durchbrechungen 20, 30 mit Schlitzen 27, 37 kombiniert sind, die mit den jeweiligen Durchbrechungen in Verbindung stehen. Es ist auch möglich, ausschließlich Schlitze 27 und 37 vorzusehen.

In der Figur 11 ist ein Filtermodul 1 dargestellt, das beispielhaft neun Filterscheiben aufweist, wovon die Filterscheibe 10' der in der Figur 4 gezeigten Ausführungsform entspricht. Die Filterelemente sind auf einer Endplatte 70 abgelegt, an der zwei Stäbe 71 befestigt sind, die in die entsprechenden Fixierausnehmungen 44 am Scheibenrand eingreifen und auf diese Weise die Ausrichtung der Filterscheiben 10' gewährleistet. An den Stäben 71 kann das gesamte Modul erfaßt und aus der Filtrationsvorrichtung entfernt werden. Ein komplizierter Aus- und Einbau entfällt. Ferner kann das gesamte Modul bis auf die Stäbe 71 und die Endplatte 70 als Ganzes entsorgt werden, ohne daß die einzelnen Scheiben voneinander getrennt werden müssen.

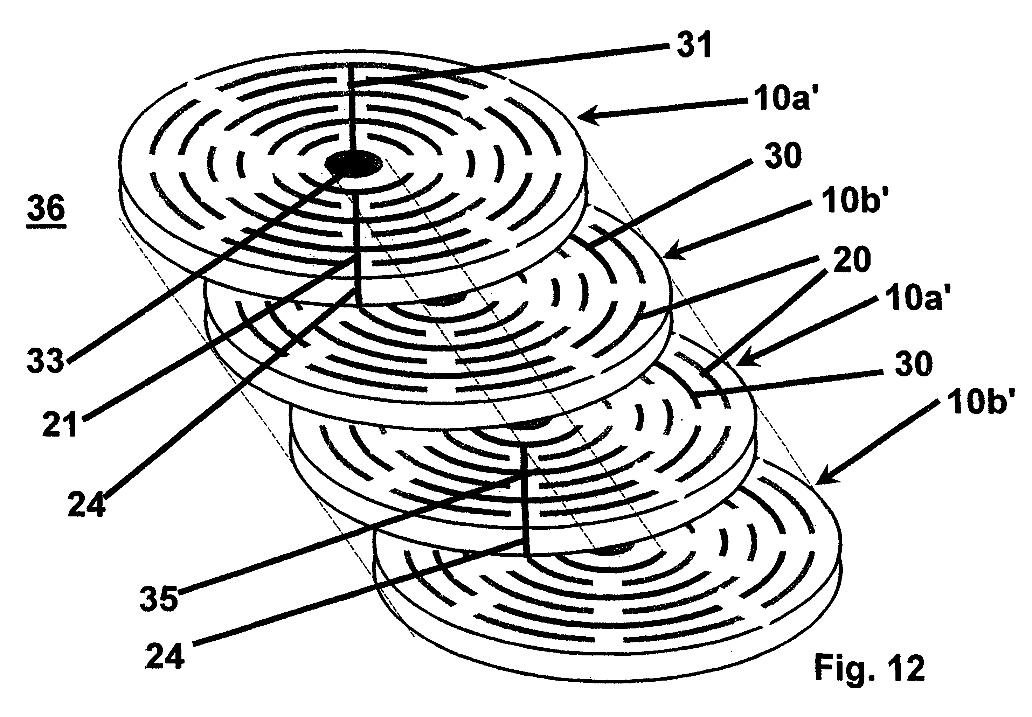

In der Figur 12 ist ein Filterscheibenstapel in Explosionsdarstellung zu sehen, wobei zwei Ausführungsformen von Filterscheiben 10a' und 10b' alternierend aufeinandergesetzt sind. Die Filterscheiben 10a' besitzen eine radiale Verbindungsdurchbrechung 21 mit einem Eingang 24 am Rand, während die Filterscheiben 10b' ausschließlich konzentrische Durchbrechungen 20, 30 aufweisen. Durch eine entsprechende Anordnung von Versteifungsstegen innerhalb der Durchbrechungen 20, 30 wird gewährleistet, daß sich die Durchbrechungen erster Art nicht mit den Durchbrechungen zweiter Art überkreuzen. Die übereinanderliegenden Sammeldurchbrechungen 33 bilden einen gestrichelten eingezeichneten Filtratkanal 35, während der Unfiltratraum 36 den die Filterelemente 10a', b' umgebenden Raum bilden.

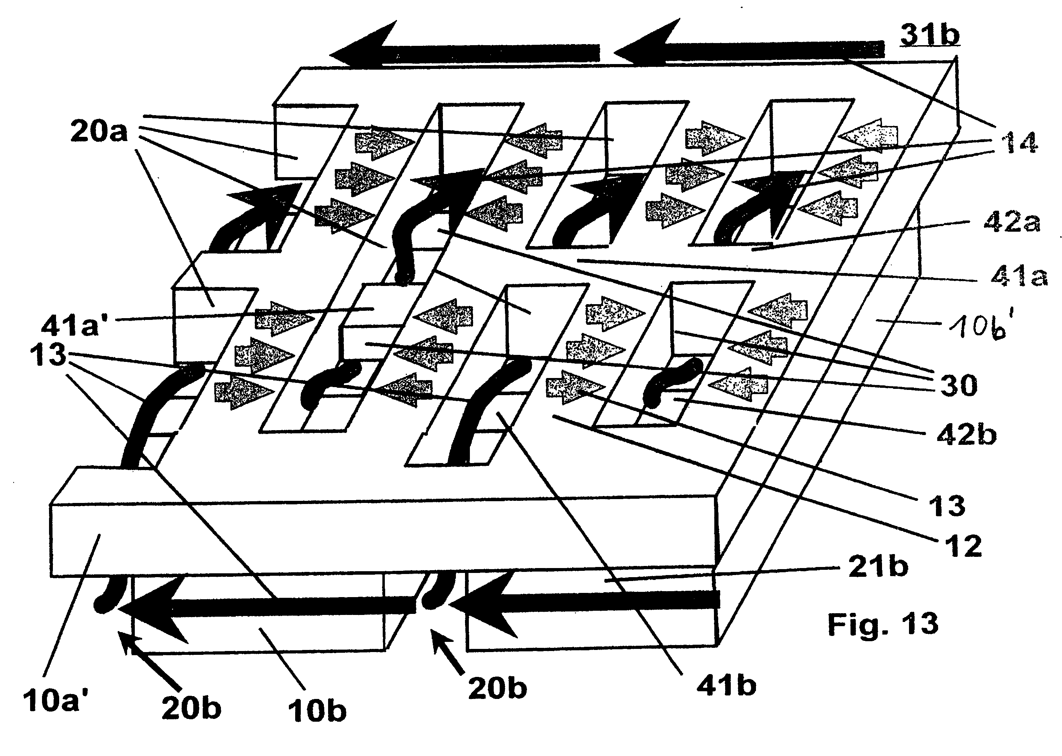

In der Figur 13 ist ein vergrößerter Ausschnitt zweier aufeinandergelegter Scheiben dargestellt. Das Unfiltrat wird durch die Verbindungsdurchbrechung 21b zugeführt und verteilt sich in die Durchbrechungen 20b. Es ist deutlich zu sehen, daß die Versteifungsstege 41a, 42a der oberen Scheibe 10a' über den entsprechenden Durchbrechungen der unteren Scheibe 10b' liegen. Entsprechend befinden sich die Versteifungsstege 41b und 42b im Bereich der entsprechenden Durchbrechungen 20a bzw. 30 der oberen Scheibe 10a'. Die Unfiltratströme 13 und die Filtratströme 14 werden wellenartig durch Über- und Unterströmen der Versteifungsstege 41b bzw. 42b in und zu den jeweiligen Durchbrechungen geführt. Uber die Verbindungsdurchbrechung 31b wird das gesammelte Filtrat abgeführt.

Nicht alle Versteifungsstege 41a, 42a, 41b, 42b müssen diesselbe Dicke aufweisen wie die Filterscheibe 10a', 10b'. Zur Verdeutlichung ist daher der Versteifungssteg 41a' mit einer reduzierten Dicke dargestellt.

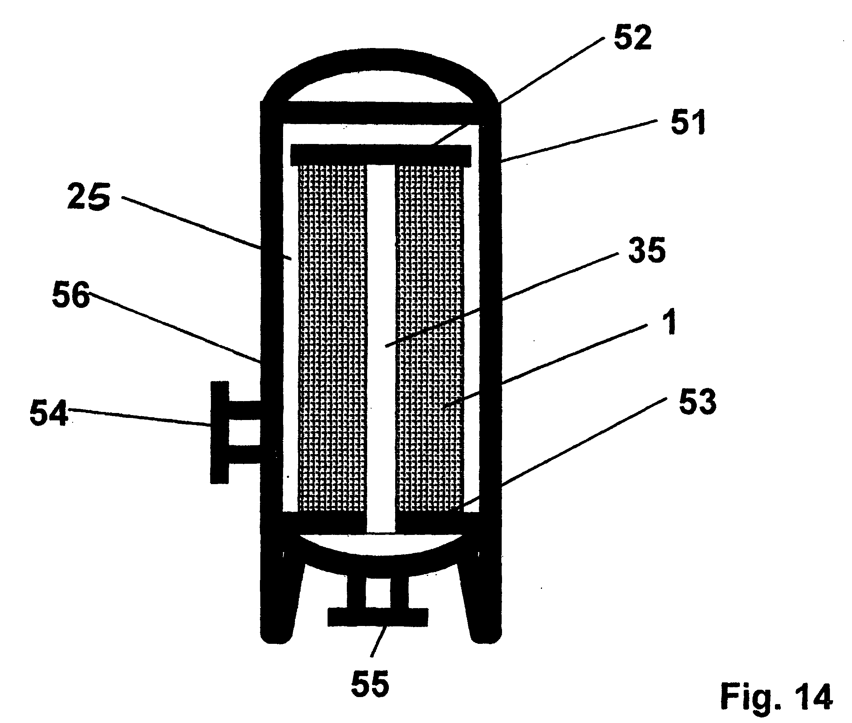

Die Figur 14 veranschaulicht eine Filtrationseinrichtung 51, in die ein Filtermodul 1 aus einer Vielzahl von Filterscheiben 10' eingebaut ist. Das Filtermodul steht auf einer unteren festen Endplatte 53. Um Längenänderungen des Moduls für einen Betrieb zu kompensieren, ist die obere Endplatte 52 beweglich gelagert. Im abgebildeten Fall liegt der Unfiltratraum 25 außen bzw. oberhalb des Moduls 1. Der Filtratraum befindet sich hier innerhalb bzw. unterhalb des Moduls 1. Das Unfiltrat gelangt durch den Stutzen 54 in der Seitenwand des Behältermantels 56 in die Filtrationseinrichtung 51, und das Filtrat verläßt ihn durch einen zentrischen Stutzen 55 am Boden desselben.

## Patentansprüche

1. Flaches stapelbares Filterelement, insbesondere Filterscheibe, aus Tiefenfiltermaterial mit einer Außenkontur und mit mindestens einer Durchbrechung (20, 20a-f) erster Art, die sich bis zur Umfangsfläche (19) erstreckt oder über mindestens eine Verbindungsdurchbrechung (21, 21a, b) mit der Umfangsfläche (19) des Filterelements in Verbindung steht, und mit mindestens einer Durchbrechung (30, 30a-g) zweiter Art, die mit der Durchbrechung (20, 20a-f) erster Art nicht in Verbindung steht und die in mindestens eine Sammeldurchbrechung (33) mündet oder über mindestens eine Verbindungsdurchbrechung (31, 31a, b) mit der Sammeldurchbrechung (33) in Verbindung steht, wobei die durch das Tiefenfiltermaterial (12) gebildete Begrenzungsfläche der Durchbrechung (20, 20a-f, 21, 21a, b, 30, 30a-g, 31, 31a, b, 33) eine Durchströmungsfläche (11a, b) für Filtrate und Unfiltrate bildet und die Durchströmungsfläche (11a, 11b) im wesentlichen senkrecht zur Ebene des Filterelements (10) angeordnet ist, **daduch gekennzeichnet,**
**daß** die Durchbrechungen erster und zweiter Art (20, 20a-f, 30, 30a-g) jeweils eine schmale längliche Kontur aufweisen, so **daß** sich eine gitteroder siebartige Struktur ausbildet, wobei die gesamte zur Verfügung stehende Fläche des Filterelementes mit Durchbrechungen (20, 20a-f, 21, 21a, b, 30, 30a-g, 31, 31a, b, 33) versehen ist.

2. Filterelement nach Anspruch 1, **dadurch gekennzeichnet, daß** die Summe aller Durchströmungsflächen (11a, b) eines Filterelements (10) größer ist als die Summe aus
- der Außenumfangsfläche (61) eines kleinsten, das Filterelement umhüllenden konvexen Körpers (60) und
- der Außenumfangsfläche (63) eines größten konvexen Körpers (62), der in eine beliebige Durchbrechung (20a-f, 21a, b, 30, 31a, b, 33) des Filterelements eingeschrieben ist.

3. Filterelement nach einem der Ansprüche 1 oder 2, **dadurch gekennzeichnet, daß** es eine der durch die Durchbrechungen gebildeten inneren Struktur (17) angepaßte Außenkontur (18) aufweist, so **daß** die Breite des filtrationswirksamen Bereichs des Tiefenfiltermaterials (12) überall gleich groß ist.

4. Filterelement nach einem der Ansprüche 1 bis 3, **dadurch gekennzeichnet**, **daß** der filtrationswirksame Bereich eine mäanderartige Gestalt aufweist.

5. Filterelement nach einem der Ansprüche 1 bis 3, **dadurch gekennzeichnet, daß** die nicht miteinander in Verbindung stehenden Durchbrechungen erster und zweiter Art (20, 30) derart benachbart zueinander angeordnet sind, **daß** die Breite des sich dazwischen befindlichen filtrationswirksamen Bereichs überall gleich groß ist.

6. Filterelement nach einem der Ansprüche 1 bis 5, **dadurch gekennzeichnet, daß** die filtrationswirksamen Bereiche ≥ 5 mm stark sind.

7. Filterelement nach einem der Ansprüche 1 bis 6, **dadurch gekennzeichnet, daß** das Filterelement (10) eine runde Außenkontur aufweist und **daß** die Durchbrechungen (20, 30) in erster und zweiter Art auf konzentrischen Kreisen liegen, **daß** die Durchbrechungen (20) erster Art über eine sich in radiale Richtung erstreckende Verbindungsdurchbrechung (21) mit der Umfangsfläche (19) des Filterelements in Verbindung stehen, und
**daß** die Sammeldurchbrechung (33) im Mittelpunkt des Filterelements (10) angeordnet ist, die über eine radiale Verbindungsdurchbrechung (31) mit den Durchbrechungen (30) zweiter Art in Verbindung steht.

8. Filterelement nach einem der Ansprüche 1 bis 7, **dadurch gekennzeichnet, daß** die Durchbrechungen (20, 30) erster Art und zweiter Art alternierend angeordnet sind.

9. Filterelement nach einem der Ansprüche 1 bis 6 oder 8, **dadurch gekennzeichnet, daß** das Filterelement (10) eine n-eckige Außenkontur aufweist und daß die Durchbrechungen (20, 30) parallel zu einer Kante des Filterelements angeordnet sind.

10. Filterelement nach einem der Ansprüche 1 bis 6, **dadurch gekennzeichnet, daß** das Filterelement (10) eine runde oder ovale Außenkontur aufweist und **daß** die Durchbrechungen (20) erster Art und die Durchbrechungen (30) zweiter Art jeweils auf mindestens einer Spirale . liegen.

11. Filterelement nach einem der Ansprüche 1 bis 10, **dadurch gekennzeichnet, daß** die Durchbrechungen (20, 30) und/oder die Verbindungsdurchbrechungen (21, 31) Versteifungsstege (41, 42, 43) aufweisen.

12. Filterelement nach einem der Ansprüche 1 bis 11, **dadurch gekennzeichnet, daß** die Versteifungsstege (41, 42, 43) aus demselben Material wie das Filterelement (10) bestehen.

13. Filterelement nach einem der Ansprüche 1 bis 12, **dadurch gekennzeichnet, daß** die Umfangsfläche (19) des Filterelements (10) mindestens eine Fixierstruktur (44) aufweist.

14. Filterelement nach einem der Ansprüche 1 bis 13, **dadurch gekennzeichnet, daß** die Durchbrechungen (20, 21, 30, 31, 33) ausgestanzt sind.

15. Filterelement nach einem der Ansprüche 1 bis 14, **dadurch gekennzeichnet, daß** die Durchbrechungen Schlitze (27, 37) sind.

16. Filtermodul aus mindestens zwei Filterelementen (10, 10a, 10b) gemäß einem der Patentansprüche 1 bis 15, wobei diese Filterelemente (10, 10a, 10b) derart aufeinandergestapelt sind, daß nur die Durchbrechungen (20, 21, 30, 31, 33) gleicher Art miteinander in Verbindung stehen und Filtratund Unfiltratkanäle (36) bilden.

17. Filtermodul nach Anspruch 16, **dadurch gekennzeichnet, daß** identische Filterelemente (10) aufeinandergestapelt sind.

18. Filtermodul nach Anspruch 16 oder 17, **dadurch gekennzeichnet, daß** Filterelemente (10a, b) mit Durchbrechungen (20, 30), die mit der Umfangsfläche (19) in Verbindung stehen, sich mit Filterelementen (10a, b) mit Durchbrechungen (20, 30), die nicht mit der Umfangsfläche (19) in Verbindung stehen, abwechseln.

19. Filtermodul nach einem der Ansprüche 16 oder 18, **dadurch gekennzeichnet, daß** die Filterelemente (10) gegeneinander verdreht aufeinanderliegen.

20. Filtermodul nach einem der Ansprüche 16 bis 19, **dadurch gekennzeichnet, daß** die Filterelemente (10) unmittelbar aufeinanderliegen.

21. Filtermodul nach einem der Ansprüche 16 bis 20, **dadurch gekennzeichnet, daß** die Filterelemente (10) miteinander verklebt oder verschweißt sind.

22. Filtermodul nach einem der Ansprüche 16 bis 21, **dadurch gekennzeichnet, daß** zwischen zwei Filterschichten (10) eine Zwischenlage mit Durchbrechungen angeordnet ist.

23. Filtermodul nach einem der Ansprüche 16 bis 22, **dadurch gekennzeichnet, daß** die Filterelemente (10) zwischen zwei Endplatten gehalten sind, von denen eine Endplatte (52, 53) beweglich gelagert ist.

## Claims

1. Flat stackable filter element, especially a filter disk, of deep-bed filter material having an outer contour and having at least one opening (20, 20a-f) of a first type which extends as far as the peripheral face (19) or which is connected to the peripheral face (19) of the filter element via at least one connection opening (21, 21a, b), and having at least one opening (30, 30a-g) of a second type which is not connected to the opening (20, 20a-f) of the first type and which discharges into at least one collection opening (33) or which is connected via at least one connection opening (31, 31a, b) to the collection opening (33), the boundary surface of the opening (20, 20a-f, 21, 21a,b, 30, 30a-g, 31, 31a,b, 33), which surface is formed by the deep-bed filter material (12), forming a flow face (11a, b) for filtered material and unfiltered material and the flow face (11a, 11b) being arranged substantially perpendicularly to the plane of the filter element (10), **characterised in that** the openings of the first and second type (20, 20a-f, 30, 30a-g) each have a narrow elongated contour so that a lattice-like or screen-like structure is formed, the entire available face of the filter element being provided with openings (20, 20a-f, 21, 21a,b, 30, 30a-g, 31, 31a,b, 33).

2. Filter element according to claim 1, **characterised in that** the sum of all of the flow faces (11a,b) of a filter element (10) is larger than the sum of
- the outer peripheral face (61) of a minimum-size convex body (60) which envelops the filter element and
- the outer peripheral face (63) of a maximum-size convex body (62) which is inserted into any opening (20a-f, 21a,b, 30, 31a,b, 33) of the filter element.

3. Filter element according to either claim 1 or claim 2, **characterised in that** it has an outer contour (18) which is matched to the inner structure (17) formed by the openings so that the width of the effective filtration area of the deep-bed filter material (12) is the same everywhere.

4. Filter element according to any one of claims 1 to 3, **characterised in that** the effective filtration area has a meander-like shape.

5. Filter element according to any one of claims 1 to 3, **characterised in that** the openings of the first and second type (20, 30) which are not connected to one another are located adjacent to one another in such a manner **that** the width of the effective filtration area which is located in-between is the same everywhere.

6. Filter element according to any one of claims 1 to 5, **characterised in that** the effective filtration areas are ≥ 5 mm thick.

7. Filter element according to any one of claims 1 to 6, **characterised in that** the filter element (10) has a round outer contour, and **in that** the openings (20, 30) of the first and second type lie on concentric circles, **in that** the openings (20) of the first type are connected to the peripheral face (19) of the filter element via a connection opening (21) which extends in the radial direction, and **in that** the collection opening (33) is located in the centre of the filter element (10) and is connected via a radial connection opening (31) to the openings (30) of the second type.

8. Filter element according to any one of claims 1 to 7, **characterised in that** the openings (20, 30) of the first type and second type are arranged in alternation.

9. Filter element according to any one of claims 1 to 6 or 8, **characterised in that** the filter element (10) has an outer contour with n corners and **in that** the openings (20, 30) are arranged parallel to one edge of the filter element.

10. Filter element according to any one of claims 1 to 6, **characterised in that** the filter element (10) has a round or oval outer contour, and **in that** the openings (20) of the first type and the openings (30) of the second type lie on at least one respective spiral.

11. Filter element according to any one of claims 1 to 10, **characterised in that** the openings (20, 30) and/or the connection openings (21, 31) have stiffening bridges (41, 42, 43).

12. Filter element according to any one of claims 1 to 11, **characterised in that** the stiffening bridges (41, 42, 43) comprise the same material as the filter element (10).

13. Filter element according to any one of claims 1 to 12, **characterised in that** the peripheral face (19) of the filter element (10) has at least one fixing structure (44).

14. Filter element according to any one of claims 1 to 13, **characterised in that** the openings (20, 21, 30, 31, 33) are punched out.

15. Filter element according to any one of claims 1 to 14, **characterised in that** the openings are slots (27, 37).

16. Filter module comprising at least two filter elements (10, 10a, 10b) according to any one of patent claims 1 to 15, those filter elements (10, 10a, 10b) being stacked on top of one another in such a manner that only the openings (20, 21, 30, 31, 33) of the same type are connected to one another and form channels (36) for filtered material and unfiltered material.

17. Filter module according to claim 16, **characterised in that** identical filter elements (10) are stacked on top of one another.

18. Filter module according to claim 16 or 17, **characterised in that** filter elements (10a, b) having openings (20, 30) that are connected to the peripheral face (19) alternate with filter elements (10a, b) having openings (20, 30) that are not connected to the peripheral face (19).

19. Filter module according to either claim 16 or claim 18, **characterised in that** the filter elements (10) lie on top of one another rotated with respect to one another.

20. Filter module according to any one of claims 16 to 19, **characterised in that** the filter elements (10) lie directly on top of one another.

21. Filter module according to any one of claims 16 to 20, **characterised in that** the filter elements (10) are adhesively bonded or welded to one another.

22. Filter module according to any one of claims 16 to 21, **characterised in that** one intermediate layer having openings is arranged between two filter layers (10).

23. Filter module according to any one of claims 16 to 22, **characterised in that** the filter elements (10) are held between two end plates, of which one end plate (52, 53) is movably supported.

## Revendications

1. Elément filtrant plat empilable, en particulier disque filtrant en un matériau filtrant dans la masse, avec au moins une traversée (20, 20a - f) de la première espèce, qui s'étend jusqu'à la surface périphérique (19) ou communique avec la surface périphérique (19) de l'élément filtrant par au moins une traversée de communication (21, 21a, b), et avec au moins une traversée (30, 30a - g) de la deuxième espèce, qui ne communique pas avec la traversée (20, 20a - f) de la première espèce et qui débouche dans au moins une traversée collectrice (33) ou communique par au moins une traversée de communication (31, 31a, b) avec la traversée collectrice (33), la surface limite formée par le matériau filtrant dans la masse (12) de la traversée (20, 20a - f, 21, 21a, b, 30, 30a - g, 31, 31a, b, 33) constituant une surface traversée par l'écoulement (11a, b) pour les filtrats et les non-filtrats, et la surface traversée par l'écoulement (11a, 11b) étant disposée essentiellement perpendiculairement au plan de l'élément filtrant (10), **caractérisé en ce que** les traversées de la première et de la deuxième espèce (20, 20a - f, 30, 30a - g) présentent respectivement un contour allongé étroit, de telle sorte qu'il s'établit une structure en grille ou en tamis, l'ensemble de la surface de l'élément filtrant à disposition étant dotée de traversées (20, 20a - f, 21, 21a, b, 30, 30a - g, 31, 31a, b, 33).

2. Elément filtrant selon la revendication 1, **caractérisé en ce que** la somme de toutes les surfaces d'écoulement (11a, b) d'un élément filtrant (10) est plus grande de la somme de
- la surface périphérique extérieure (61) d'un corps convexe (60) de taille minimale enveloppant l'élément filtrant et de
- la surface périphérique extérieure (63) d'un corps convexe (62) de taille maximale inscrit dans une traversée quelconque (20a - f, 21a, b, 30, 31a, b, 33) de l'élément filtrant.

3. Elément filtrant selon une des revendications 1 ou 2, **caractérisé en ce qu'**il présente un contour extérieur (18) adapté à la structure intérieure (17) formée par les traversées, de telle sorte que la largeur du domaine efficace de filtration du matériau du filtre en masse (12) est la même partout.

4. Elément filtrant selon une des revendications 1 à 3, **caractérisé en ce que** le domaine efficace de filtration a une configuration en méandres.

5. Elément filtrant selon une des revendications 1 à 3, **caractérisé en ce que** les traversées de première et de deuxième espèce (20, 30), qui ne sont pas en communication entre elles, sont disposées au voisinage les unes des autres de telle sorte que la largeur du domaine efficace pour la filtration se trouvant entre elles est partout la même.

6. Elément filtrant selon une des revendications 1 à 5, **caractérisé en ce que** les domaines efficaces pour la filtration ont une épaisseur ≥5 mm.

7. Elément filtrant selon une des revendications 1 à 6, **caractérisé en ce que** l'élément filtrant (10) présente un contour extérieur rond et **que** les traversées (20, 30) de la première et de la deuxième espèce se trouvent sur des cercles concentriques, **que** les traversée(20) de la première espèce sont en communication avec la surface périphérique (19) de l'élément filtrant par l'intermédiaire de traversées de communication (21) disposées radialement et **en ce que** la traversée collectrice (33) est disposée au centre de l'élément filtrant (10), et communique avec les traversées de la deuxième espèce (30) par l'intermédiaire d'une traversée de communication radiale (31).

8. Elément filtrant selon une des revendications 1 à 7, **caractérisé en ce que** les traversées (20, 30) de la première et de la deuxième espèce sont disposées alternées.

9. Elément filtrant selon une des revendications 1 à 6 ou 8, **caractérisé en ce que** l'élément filtrant (10) présente un contour extérieur polygonal à n sommets et **en ce que** les traversées (20, 30) sont disposées parallèlement à une arête de l'élément filtrant.

10. Elément filtrant selon une des revendications 1 à 6, **caractérisé en ce que** l'élément filtrant (10) présente un contour extérieur rond ou ovale et **en ce que** les traversées (20) de la première espèce et les traversées (30) de la deuxième espèce se trouvent respectivement sur au moins une spirale.

11. Elément filtrant selon une des revendications 1 à 10, **caractérisé en ce que** les traversées (20, 30) et / ou les traversées de communication (21, 31) présentent des nervures de raidissement (41, 42, 43).

12. Elément filtrant selon une des revendications 1 à 11, **caractérisé en ce que** les nervures de raidissement (41, 42, 43) sont constituées du même matériau que l'élément filtrant (10).

13. Elément filtrant selon une des revendications 1 à 12, **caractérisé en ce que** la surface périphérique (19) de l'élément filtrant (10) présente au moins une structure de positionnement (44).

14. Elément filtrant selon une des revendications 1 à 13, **caractérisé en ce que** les traversées (20, 21, 30, 31, 33) sont perforées par estampage.

15. Elément filtrant selon une des revendications 1 à 14, **caractérisé en ce que** les traversées (27, 37) sont des fentes.

16. Module filtrant en au moins deux éléments filtrants (10, 10a, 10b) conformes aux revendications 1 à 15, ces éléments filtrants (10, 10a, 10b) étant empilés les uns sur les autres de telle sorte que seules des traversées (20, 21, 30, 31, 33) de même espèce communiquent entre elles et forment des canaux de filtrat et de non-filtrat (36).

17. Module filtrant selon la revendication 16, **caractérisé en ce que** des éléments filtrants (10) identiques sont empilés l'un sur l'autre.

18. Module filtrant selon une des revendications 16 ou 17, **caractérisé en ce que** des éléments filtrants (10a, b) avec des traversées (20, 30) qui communiquent avec la surface périphérique (19) alternent avec des éléments filtrants (10a, b) avec des traversées (20, 30) qui ne communiquent pas avec la surface périphérique (19).

19. Module filtrant selon une des revendications 16 ou 18, **caractérisé en ce que** les éléments filtrants (10) reposent les uns sur les autres décalés en rotation.

20. Module filtrant selon une des revendications 16 à 19, **caractérisé en ce que** les éléments filtrants (10) reposent les uns sur les autres sans intermédiaire.

21. Module filtrant selon une des revendications 16 à 20, **caractérisé en ce que** les éléments filtrants (10) sont collés ou soudés les uns aux autres.

22. Module filtrant selon une des revendications 16 à 21, **caractérisé en ce qu'**entre deux couches filtrantes (10) est disposée une couche intermédiaire avec des traversées.

23. Module filtrant selon une des revendications 16 à 22, **caractérisé en ce que** les éléments filtrants (10) sont maintenus entre deux plaques d'extrémité, dont une plaque d'extrémité (52, 53) est montée mobile.
